# EUROPEAN PATENT SPECIFICATION

(11) **EP 4 392 665 B1**
(45) Date of publication and mention of the grant of the patent: **30.09.2026**
(21) Application number: 22764308.7
(22) Date of filing: 23.08.2022
(51) Int. Cl.: F03D 7/04

(54) **ADAPTIVE PITCH REFERENCE RATE FOR CONTROLLING WIND TURBINE BLADE PITCH**
ADAPTIVE PITCH-REFERENZRATE ZUR STEUERUNG DES BLATTWINKELS EINER WINDTURBINE
TAUX DE RÉFÉRENCE DE PAS ADAPTATIF POUR COMMANDER LE PAS DE PALE D'ÉOLIENNE

(30) Priority: 23.08.2021 DK PA202170420
(43) Date of publication of application: 03.07.2024
(73) Proprietor: VESTAS WIND SYSTEMS A/S, 8200 Aarhus N (DK)
(72) Inventor: ESTELLES MARTINEZ, Silvia, 8200 Aarhus N (DK); CAPONETTI, Fabio, 8200 Aarhus N (DK); ZINCK, Kasper, 8200 Aarhus N (DK)
(74) Representative: Vestas Patents Department
(86) International application number: PCT/DK2022/050171
(87) International publication number: WO 2023/025363

(56) References cited:
- EP-A1- 3 070 327
- EP-A1- 3 805 556
- EP-A1- 3 869 031
- WO-A1-2019/238188

## Description

### FIELD OF THE INVENTION

The invention relates to controlling blade pitch in a wind turbine and, in particular, to controlling blade pitch in accordance with a determined adaptive pitch reference rate. Aspects of the invention relate to a method, to a controller, and to a wind turbine.

### BACKGROUND

In a wind turbine, a hydraulic pitch system is used to control the pitch angle of the rotor blades in order to optimise wind energy production and to ensure that the wind turbine is not subjected to extreme loads in the presence of relatively strong winds.

A hydraulic pitch system is used for adjusting a blade pitch angle in response to wind conditions in the vicinity of the wind turbine. The hydraulic system includes a hydraulic cylinder and a pitch piston movable in the hydraulic cylinder. An accumulator is hydraulically connected to the cylinder to store energy and absorb pulsations in the hydraulic system. Pressure in the accumulator is provided by one or more hydraulic pumps.

Blade pitch is controlled in accordance with a pitch reference determined by a controller of the wind turbine. In particular, the pitch reference may be determined to be a desired blade pitch - e.g. in terms of maximising energy capture, for instance - based on wind measurements, and the hydraulic system adjusts the actual blade pitch based on this determination.

There needs to be sufficient pressure in the hydraulic system in order for it to be able to control blade pitch in accordance with the determined pitch reference. In this regard, in certain modes of wind turbine operation the hydraulic system may adjust blade pitch at a predetermined constant rate. That is, hydraulic system controls blade pitch in accordance with a predetermined constant pitch reference rate for certain control operations. This pitch reference rate is typically predetermined in a design phase of a wind turbine to be set at a level that aims to ensure there is always sufficient pressure available to control blade pitch. However, the predetermined constant pitch reference rate is often different from a pitch reference rate that would correspond to the actual capacity of the hydraulic system during operation of the wind turbine.

In some modes of wind turbine operation, relatively large changes in blade pitch are needed; however, the rate at which these changes can be made is limited by the predetermined constant pitch reference rate. This can lead to inefficiencies in energy capture if the wind turbine takes longer to reach desired operating settings than is needed.

On the other hand, in some other modes of wind turbine operation the hydraulic pumps may not so readily be pressurised, e.g. if there is a reduction in available power to do so. In such cases there is a risk that controlling blade pitch in accordance with the predetermined constant pitch reference rate may deplete pressure levels in the hydraulic system, which may render it inoperable. This could lead to enforced shutdown of the wind turbine, which in turn can lead to an extended period in which power generating capability is lost.

US2019/0078555 describes obtaining a measurement indicative of a current level of hydraulic pressure in the hydraulic pitch system for use in controlling blade pitch in a wind turbine.

It is against this background to which the present invention is set.

EP 3 805 556 A1 describes, according to its abstract, a method of controlling a wind turbine, wherein a minimum required hydraulic pressure represents a hydraulic pressure of at least one accumulator of the wind turbine which is required to pitch at least one blade of the wind turbine which is associated with the accumulator into a stop position of the wind turbine, and wherein a pitch angle represents a pitch angle of a normal of the at least one blade of the wind turbine relative to an incoming wind direction. The method comprises (a) determining a minimum requirement function of the minimum required hydraulic pressure dependent on the pitch angle, (b) detecting a current hydraulic pressure in the at least one accumulator at a current pitch angle of the at least one blade, and (c) controlling the wind turbine such that the current hydraulic pressure is above the minimum required hydraulic pressure at the current pitch angle.

WO 2019/238188 A1 describes, according to its abstract, a hydraulic pitch system where a velocity (e.g., the velocity of a hydraulic cylinder or the piston rod in the cylinder) is used to dynamically determine a flow gain for the hydraulic cylinder. The flow gain is then used by a pitch controller to generate a setting that controls a hydraulic cylinder which sets a desired pitch angle of a wind turbine blade. In one embodiment, dynamically determining the flow gain takes into account changes in pressure in the chambers of the hydraulic cylinder.

### SUMMARY OF THE INVENTION

According to an aspect of the present disclosure there is provided a method of controlling blade pitch in a wind turbine. The wind turbine comprises a plurality of rotor blades and a hydraulic pitch system for adjusting a pitch of each of the rotor blades. The method comprises obtaining a measurement indicative of a current level of hydraulic pressure available in the hydraulic pitch system. The method comprises determining, based on the obtained measurement, an adaptive pitch reference rate indicative of a rate at which the pitch of the rotor blades is to be adjusted by the hydraulic system. The method comprises controlling the hydraulic pitch system to adjust the pitch of the rotor blades in accordance with the determined adaptive pitch reference rate.

Determining the adaptive pitch reference rate comprises determining a gain factor based on the obtained hydraulic pressure measurement, and may comprise applying the determined gain factor to a predetermined constant pitch reference rate to obtain the adaptive pitch reference rate.

The determined gain factor may be proportional to the current level of hydraulic pressure.

The hydraulic pitch system may comprise a plurality of hydraulic pumps. The predetermined constant pitch reference rate may correspond to a pitch reference rate achievable when using only one of the hydraulic pumps.

The adaptive pitch rate reference may be determined to vary linearly with the measured hydraulic pressure.

The method may be implemented when the wind turbine is operating in a start-up mode in which a generator speed of the wind turbine is to be increased prior to the wind turbine producing electricity for a grid to which the wind turbine is connected.

The determined gain factor is greater than one.

The determined gain factor may be less than or equal to a maximum gain factor indicative of a maximum gain permitted to be applied to the predetermined constant pitch reference rate.

The method may be implemented when the wind turbine is being paused, i.e. when the wind turbine is changing from a power production mode, for instance, to a mode in which operation of the wind turbine is stopped. Pausing the wind turbine in this way may be implemented using proportional valves of the hydraulic system.

The method may be implemented when the wind turbine is operating in a power save mode (or idle power mode) in which the wind turbine operates under power consumption restrictions relative to a normal mode of operation of the wind turbine. In a power save mode, the wind turbine may consume electricity from a battery of the wind turbine, or to which the wind turbine is connected.

The determined gain factor may be less than or equal to one.

The determined gain factor may be greater than or equal to a minimum gain factor indicative of a minimum gain permitted to be applied to the predetermined constant pitch reference rate.

In the power save mode a hydraulic pump of the hydraulic pitch system may be activated to increase the hydraulic pressure in the hydraulic pitch system when the measured hydraulic pressure decreases below a lower threshold pressure. The hydraulic pitch system may be controlled to adjust the pitch of the rotor blades only when the measured hydraulic pressure increases above a pitch control threshold pressure greater than the lower threshold pressure. Optionally, the hydraulic pitch system may be deactivated from increasing the hydraulic pressure in the hydraulic pitch system when the measured hydraulic pressure increases above an upper threshold pressure greater than the lower threshold pressure and the pitch control threshold pressure.

The current level of hydraulic pressure available in the hydraulic pitch system may correspond to a combined pressure in one or more accumulators of the hydraulic pitch system.

According to another aspect of the disclosure there is provided a non-transitory, computer-readable storage medium storing instructions thereon that when executed by one or more processors cause the one or more processors to perform the method described above.

According to another aspect of the disclosure there is provided a controller for controlling blade pitch in a wind turbine. The wind turbine comprises a plurality of rotor blades and a hydraulic pitch system for adjusting a pitch of each of the rotor blades. The controller is configured to receive data, from at least one hydraulic pressure sensor, indicative of a current level of hydraulic pressure available in the hydraulic pitch system. The controller is configured to determine, based on the obtained measurement, a pitch rate reference indicative of a rate at which the pitch of the rotor blades is to be adjusted by the hydraulic system. The controller is configured to transmit a control signal configured to control the hydraulic pitch system to adjust the pitch of the rotor blades in accordance with the determined pitch rate reference.

According to another aspect of the disclosure there is provided a wind turbine comprising a controller as described above.

### BRIEF DESCRIPTION OF THE DRAWINGS

Examples of the disclosure will now be described with reference to the accompanying drawings, in which:
Figure 1 shows a schematic illustration of a wind turbine in accordance with an aspect of the disclosure;
Figure 2 shows a schematic illustration of a controller, of the wind turbine of Figure 1, in accordance with an aspect of the controller;
Figure 3 illustrates steps of a method, performed by the controller of Figure 2, in accordance with an aspect of the disclosure;
Figure 4 shows an example of how a gain factor, to be used for controlling pitch adjustment of rotor blades of the wind turbine of Figure 1, varies with hydraulic pressure in a hydraulic pitch system of the wind turbine of Figure 1.
Figure 5 shows how the gain factor varies with hydraulic pressure in a different example from Figure 4; and,
Figure 6 shows how the gain factor varies with hydraulic pressure in a further different example from Figures 4 and 5.

### DETAILED DESCRIPTION

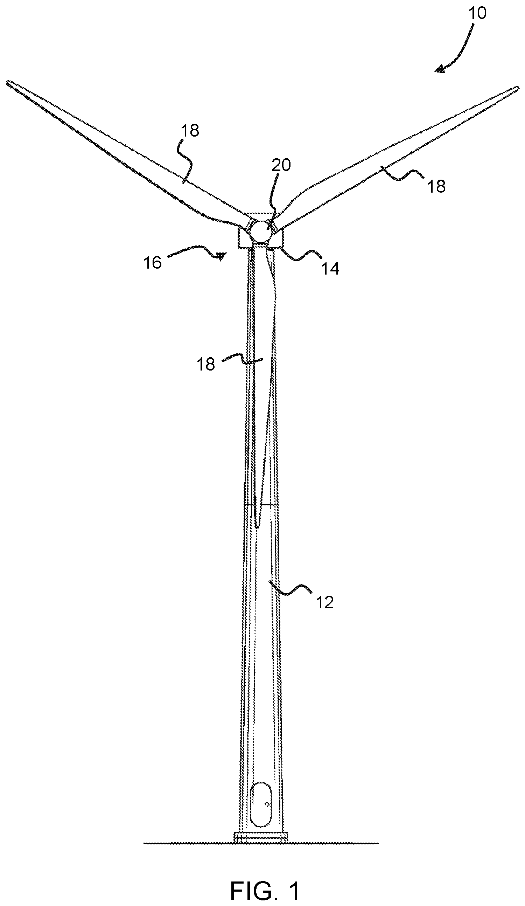

Figure 1 shows a wind turbine 10 in which an example of the disclosure may be incorporated. The wind turbine 10 comprises a tower 12 supporting a nacelle 14 to which a rotor 16 is mounted. The rotor 16 comprises a plurality of wind turbine blades 18 that extend radially from a hub 20. In this example, the rotor 16 comprises three blades 18 and a single rotor 16, although other configurations including any suitable number of blades and rotors are possible.

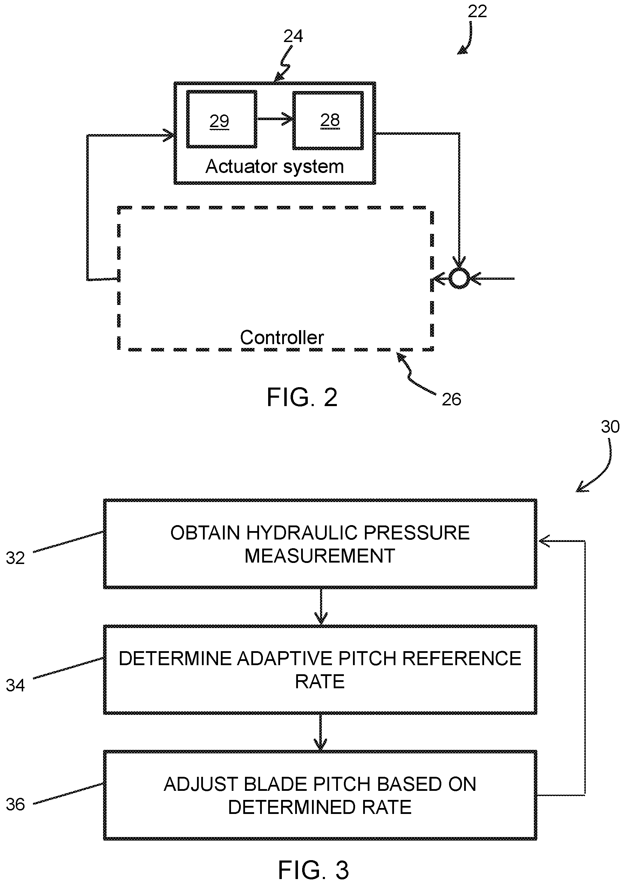

Figure 2 shows a wind turbine control system 22 in accordance with an example of the disclosure which may be implemented in the wind turbine 10 of Figure 1. Here, the control system 22 includes an actuator system 24 that is controlled by a control unit or (overall) controller 26. In this particular example, the actuator system 24 may be, or may comprise, a hydraulic pitch system for controlling pitch of one or more of the wind turbine blades 18 which includes a hydraulic actuator 28 arranged to adjust blade pitch. The actual position of the actuator 28 is controllable by an actuator position control unit 29 which provides a positioning command signal to the hydraulic actuator 28. The controller 26 and actuator system 24 may be replicated for each of the blades 18 of the wind turbine 10 so that the position of each blade 18 may be controlled independently. Alternatively, a single controller 26 may be provided for controlling blade pitch of the wind turbine 10. The controller 26 may be regarded as being part of, or separate from, the hydraulic pitch system. The controller 26 may for instance be positioned in the nacelle 14 of the wind turbine 10.

In more detail, for each rotor blade 18 the hydraulic pitch system may comprise a hydraulic cylinder for adjusting a pitch angle of the blade 18, a pitch piston movable in the hydraulic cylinder, and first and second inlets arranged on respective sides of the pitch piston. An accumulator may be hydraulically connected to the cylinder. Pressure in the accumulator is provided by one or more hydraulic pumps. The cylinder can adjust the pitch angle of the rotor blade 18 in response to wind measurements, and the accumulator can absorb pulsations in the hydraulic system as well as being used as energy backup. The hydraulic pitch system for each blade 18 may be located in the rotor hub 20 of the wind turbine 10.

Each hydraulic pitch system may be capable of pitching the corresponding blade 18 to any position in the range of, for instance, -90 degrees to +90 degrees. During a normal operating mode of the wind turbine 10, the hydraulic pitch systems may operate as individual systems, adjusting to an individual pitch reference angle, determined based on operating conditions of the wind turbine, e.g. wind conditions in the vicinity of the wind turbine 10.

The hydraulic pitch system is controlled to adjust blade pitch at a certain rate of change. That is, the hydraulic pitch system is controlled in accordance with a certain pitch reference rate in order to adjust blade pitch to the desired angle or pitch reference. Typically, the pitch reference rate is a constant rate in some operation modes and is predetermined in a design phase of a wind turbine. In general, such a constant rate is set at a level that aims to ensure there is always sufficient pressure available in the hydraulic pitch system to adjust the blades to the determined desired pitch.

In one example, a wind turbine may include a plurality of hydraulic pumps (e.g. three). The constant pitch reference rate may be set such that one of the plurality of hydraulic pumps, e.g. the one with the lowest capacity, providing pressure for all of the accumulators (e.g. three accumulators) could be sustained while changing the wind turbine from a stopped state, e.g. where the rotor blades are pitched at 90 degrees, until a normal operating mode of the wind turbine is reached, e.g. a power production state. In such a case, therefore, the predetermined constant pitch reference rate is set to a value that is different from a pitch reference rate that would correspond to an actual capacity of the hydraulic system during operation of the wind turbine in such an operating mode.

The present invention provides for an adaptive (not predetermined) pitch reference rate by which a wind turbine hydraulic pitch system is controlled. In particular, the adaptive pitch reference rate is determined based on an actual hydraulic capacity of the hydraulic pitch system at a given time step. This is advantageous in that it increases the power generating capability of the wind turbine and reduces the risk of the wind turbine being shut down. In particular, in situations in which there is a greater level of available hydraulic pressure, the pitch reference rate may be increased so that a desired pitch reference angle - that may be associated with maximising energy capture - is attained more quickly. On the other hand, in situations in which a there is reduced level of available hydraulic pressure, the pitch reference rate may be decreased to avoid stores of hydraulic pressure being depleted (which occurs more quickly at higher pitch reference rates), thereby reducing the risk of enforced wind turbine shut down.

Figure 3 illustrates the steps of a method 30 performed by the controller 26 (or control system 22) in accordance with the present invention. At step 32, the controller 26 obtains a measurement indicative of a current level of hydraulic pressure available in the hydraulic pitch system of the wind turbine 10. The pitch system may include a plurality of hydraulic cylinders for adjusting the pitch of the rotor blades 18, and each cylinder may have an accumulator associated therewith. The measurement may therefore involve measuring the hydraulic pressure in each of the plurality of accumulators and combining as appropriate to obtain the current level of available hydraulic pressure. Each accumulator may therefore have an associated sensor for measuring current hydraulic pressure therein.

At step 34 of the method 30, the controller 26 determines an adaptive pitch reference rate indicative of a rate at which the pitch of the rotor blades 18 is to be adjusted by the hydraulic system. This determination is based on the obtained measurement of available hydraulic pressure. The particular logic used by the controller 26 to determine the adaptive pitch reference rate based on the obtained measurement may be defined in any suitable manner. However, in general it may be that increased levels of hydraulic pressure in the hydraulic pitch system leads to an increased adaptive pitch reference rate.

In one example, determining the adaptive pitch reference rate may be implemented as determining a scheduling gain factor based on the obtained measurement, and then applying the determined gain to a baseline constant pitch reference rate to obtain the adaptive pitch reference rate. This baseline rate could for instance be a predetermined constant pitch reference rate as used in known methods, and as mentioned above.

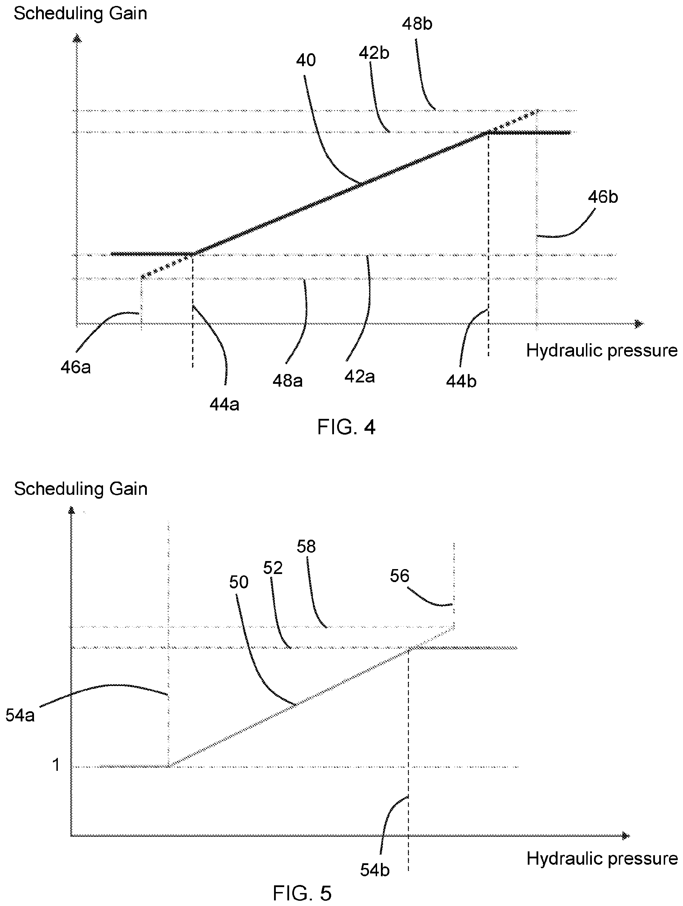

Figure 4 illustrates one example of how such a scheduling gain 40 varies with measured or available hydraulic pressure in the hydraulic pitch system of the wind turbine 10. In the illustrated example, the scheduling gain increases linearly with increasing hydraulic pressure in the hydraulic system between minimum and maximum gain values 42a, 42b. In particular, the gain 40 is constant at the minimum gain value 42a for available hydraulic pressure values up to a certain (minimum) hydraulic pressure value 44a, increases linearly to the maximum gain value 42b at a certain (maximum) hydraulic pressure value 44b, and constant at the maximum gain value 42b for available hydraulic pressure values greater than the maximum hydraulic pressure value 44b.

Figure 4 indicates low and high hydraulic pressure values 46a, 46b that may represent the lowest and highest hydraulic pressure values that are possible in the hydraulic system. These low and high hydraulic pressure values 46a, 46b may be associated with respective low and high gain values 48a, 48b representing the lowest and highest gains that may be applied to obtain the adaptive pitch reference rate if a linearly increasing gain is defined all the way from the low pressure value 46a to the high pressure value 46b.

The minimum and maximum gain values 42a, 42b are parameters that may be tuned as desired. In the illustrated example, the minimum gain 42a is slightly greater than the low gain value 48a, and the maximum gain 42b is slightly less than the high gain value 48b. Such an approach may be beneficial to avoid the hydraulic system from operating at its extreme limits. In different examples, however, the minimum and maximum gains 42a, 42b may be tuned to be equal to the low and high gain values 48a, 48b, respectively.

In the broad, schematic example illustrated in Figure 4, the possible gain values on the y axis may encompass values less than and greater than one. That is, the scheduling gain may be applied to decrease or increase the baseline pitch reference rate as required. In such a case, the minimum gain value may therefore be less than one and the maximum gain value may be greater than one.

Although Figure 4 illustrates a linear relationship between hydraulic pressure and gain (at least between the minimum and maximum gain values 42a, 42b), more generally the gain may simply be directly proportional to the hydraulic pressure. A constant gradient as in Figure 4 may be beneficial in that it is simple to tune the controller; however, a different shape may be defined as appropriate, e.g. a quadratic curve.

At step 34 of the method 30, the controller 26 controls the hydraulic pitch system 22 to adjust the pitch of the rotor blades 18 in accordance with the determined adaptive pitch reference rate. In this way, the method 30 operates as a feedback control loop that uses the measured pressure levels in the pitch hydraulic system to calculate an adaptive pitch reference rate based on the true capacity of the hydraulic system.

The described adaptive pitch reference rate may be used to control blade pitch during normal operation of the wind turbine 10 (noting that other factors such as generator speed are also used to control the turbine in normal operation). However, even greater benefits may be achieved by using the described adaptive pitch reference rate during some other modes of operation, as described below.

When the wind turbine 10 is being started up, the rotor blades 18 are required to be pitched into the wind to increase generator speed of the wind turbine 10 before connecting and charging up the wind turbine converter and start producing power to the grid. This period of starting the wind turbine 10 before it starts generating power for the grid may be referred to a start-up mode of operation of the wind turbine 10. As the blades 18 may be pitch substantially completely out of the wind during a period of shut down, then the blades 18 may be required to be pitched through a relatively large angle to reach the desired pitch. During the start-up mode the wind turbine 10 may be controlled purely by blade pitch adjustment.

If the rate at which the blades 18 may be pitched into the wind is limited to a predetermined rate less than the capacity of the hydraulic system during start-up mode, then the time that the wind turbine generator takes to reach a minimum speed needed for connecting to the grid increases. Therefore, this means that the time that the wind turbine 10 is not producing power for the grid increases, thereby reducing turbine efficiency. Existing solutions for increasing wind turbine generator speed during start-up mode uses a constant pitch reference rate to pitch into the wind, calculated offline as the pitch rate that one single hydraulic pump (of the plurality of pumps of the wind turbine) can sustain over time to account for malfunctions of the pumps.

Figure 5 illustrates an example of how a scheduling gain 50 varies with measured or available hydraulic pressure in the hydraulic pitch system when the wind turbine 10 is operating in a start-up mode. More generally, Figure 5 illustrates an example of how the scheduling gain may be varied when the hydraulic system has the capacity to sustain a pitch reference rate greater than the predetermined constant reference rate. Even when this is the case, it may only be worthwhile using the gain scheduling of Figure 5 when relatively large changes in pitch angle are needed (which may be the case in only certain modes of operation, including in start-up mode).

As indicated in Figure 5, a gain scheduling 50 between one and a maximum gain value 52 is calculated proportional to the pressure of the hydraulic pitch accumulators. This is then multiplied by the constant pitch reference rate, which may correspond to the maximum pitch rate that is allowable when only a single one of the plurality of hydraulic pumps is working. Therefore, this will give a higher adaptive pitch rate reference rate when more than one pump is available to provide pressure, thus optimizing the use of the existing hydraulic system, and reducing the start-up time of the wind turbine 10.

Tuning of the pressure levels needs to be performed in consideration of the number of hydraulic pumps present on the wind turbine 10, and allowing for a safe margin to avoid depleting the accumulators, which could result in a shut down of the wind turbine 10. In this regard, in a corresponding manner to the example illustrated in Figure 4 the gain 50 is constant at one for available hydraulic pressure values up to a minimum hydraulic pressure value 54a, increases linearly to the maximum gain value 52 at a maximum hydraulic pressure value 54b, and constant at the maximum gain value 52 for available hydraulic pressure values greater than the maximum hydraulic pressure value 54b.

A high hydraulic pressure value 56 representing a highest hydraulic pressure value that may be possible in the hydraulic system is defined, and is associated with a high gain value 58 in a corresponding manner to Figure 4. The maximum gain 52 may be set to be less than or equal to the high gain value 58.

Another mode of operation in which the described adaptive pitch reference rate may be particularly beneficial is one in which blade pitch needs to be adjusted when the hydraulic capacity of the wind turbine 10 is reduced. In such modes, if a predetermined constant pitch reference rate that is higher than can be sustained is used then discharge of the hydraulic system may happen. This could lead to an inoperable pitch system.

One such mode of operation may be a power save mode or idle power mode in which less power is available to operate or control the wind turbine 10. In particular, in a power save mode the turbine 10 may be disconnected from the grid and the turbine is instead powered via the use of batteries, e.g. to keep the blades 18 aligned with the wind. In the power save mode, much of the functionality of the wind turbine 10 is disabled. In particular, the hydraulic system may reduce the number of pumps used to control blade pitch. For instance, in normal operation the hydraulic system may use a plurality - e.g. three - alternating current (AC) pumps for blade pitch control, whereas in the power save mode the hydraulic system may use only a single direct current (DC) pump (i.e. different from the AC pumps) for this purpose, which may be smaller than any of the pumps for normal operation.

More generally, therefore, in the power save mode the one or more pumps used to build up pressure in the hydraulic system have a reduced capacity relative to the those used during normal operation to control the same pitch system. Furthermore, in the power save mode a control strategy for the hydraulic system may be based on hysteresis bands rather than continuous operation as in a normal mode. This means that in the power save mode the one or more hydraulic pumps are not always active and, in particular they may be activated only when the pressure falls below a prescribed value. Hysteresis may be used to avoid continual activation and deactivation of the pumps, where the pressure at which the pumps are activated is less than the pressure at which they are deactivated. Furthermore, if the pressure falls to a certain trigger value less than the activation value then enforced shut down may be needed. To avoid an immediate decrease in pressure towards this trigger point when the pump activation pressure is reached, the blade pitch may not be adjusted immediately upon pump activation. Rather, it may be waited until the pressure has built up sufficient before blade pitch control is deployed. Purely as an illustrative example, the trigger point pressure may be about 210 bar, the pump activation pressure may be about 222 bar, and the pump deactivation pressure may be about 250 bar.

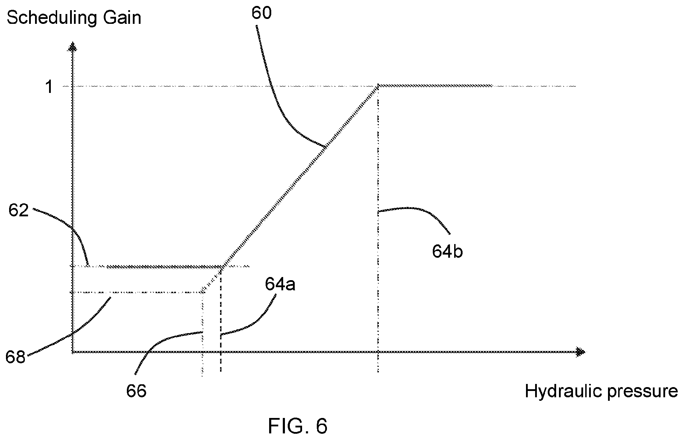

Figure 6 illustrates an example of how a scheduling gain 60 varies with measured or available hydraulic pressure in the hydraulic pitch system when the wind turbine 10 is operating in a power save mode. More generally, Figure 6 illustrates an example of how the scheduling gain may be varied when the hydraulic system has reduced capacity such that it is riskier to, or it cannot, sustain the predetermined constant reference rate.

As indicated in Figure 6, a gain scheduling 60 between a minimum gain value 62 and one is calculated proportional to the pressure of the hydraulic pitch accumulators. This is then multiplied by the predetermined (baseline) pitch reference rate to obtain the adaptive pitch reference rate. Therefore, this will give an adaptive pitch rate reference rate that is based on available pressure and that is lower than the predetermined (baseline) pitch reference rate. This reduces the risk of depletion of the hydraulic system pressure levels, which may necessitate stopping the wind turbine 10 as a safety shut down with any remaining pressure in the accumulators.

In a corresponding manner to the example illustrated in Figure 4 the gain 60 is constant at the minimum gain value 62 for available hydraulic pressure values up to a minimum hydraulic pressure value 64a, increases linearly to one at a maximum hydraulic pressure value 64b, and is constant at one for available hydraulic pressure values greater than the maximum hydraulic pressure value 64b.

A low hydraulic pressure value 66 representing a lowest hydraulic pressure value that may be possible in the hydraulic system is defined, and is associated with a low gain value 68 in a corresponding manner to Figure 4. The minimum gain 62 may be set to be greater than or equal to the low gain value 68. The low gain value 68 may be zero, i.e. no blade pitch adjustment. Tuning of the minimum gain 62 needs to be performed in consideration of what the expected pitch rate is when the hydraulic pressure is below the selected low value. Tuning of the pressure level thresholds needs to be performed in consideration of the operation and control of the hydraulic pump.

The method 30 may be performed substantially continuously, e.g. at each time step, or may be performed periodically, e.g. after a prescribed number of time steps. The method 30 may be performed only when the wind turbine 10 is operating in certain operating modes, e.g. start up mode, power save mode, when the wind turbine 10 is being paused, etc.

Many modifications may be made to the described examples without departing from the scope of the appended claims.

## Claims

1. A method (30) of controlling blade pitch in a wind turbine (10), the wind turbine comprising a plurality of rotor blades (18) and a hydraulic pitch system (24) for adjusting a pitch of each of the rotor blades, the method comprising:
obtaining (32) a measurement indicative of a current level of hydraulic pressure available in the hydraulic pitch system;
determining (34), based on the obtained measurement, an adaptive pitch reference rate indicative of a rate at which the pitch of the rotor blades is to be adjusted by the hydraulic system, and,
controlling the hydraulic pitch system to adjust (36) the pitch of the rotor blades in accordance with the determined adaptive pitch reference rate; **characterized in that** determining the adaptive pitch reference rate comprises determining a gain factor based on the obtained measurement, and applying the determined gain factor to a predetermined constant pitch reference rate to obtain the adaptive pitch reference rate, wherein the determined gain factor is greater than one.

2. A method according to Claim 1, wherein the determined gain factor is proportional to the current level of hydraulic pressure.

3. A method according to Claim 1 or Claim 2, wherein the hydraulic pitch system comprises a plurality of hydraulic pumps, and wherein the predetermined constant pitch reference rate corresponds to a pitch reference rate achievable when using only one of the hydraulic pumps.

4. A method according to any previous claim, wherein the adaptive pitch rate reference is determined to vary linearly with the measured hydraulic pressure.

5. A method according to any previous claim, wherein the method is implemented when the wind turbine is operating in a start-up mode in which a generator speed of the wind turbine is to be increased prior to the wind turbine producing electricity for a grid to which the wind turbine is connected.

6. A method according to any previous claim, wherein the determined gain factor is less than or equal to a maximum gain factor indicative of a maximum gain permitted to be applied to the predetermined constant pitch reference rate.

7. A method according to any previous claim, wherein the current level of hydraulic pressure available in the hydraulic pitch system corresponds to a combined pressure in one or more accumulators of the hydraulic pitch system.

8. A controller (26) for controlling blade pitch in a wind turbine (10), the wind turbine comprising a plurality of rotor blades (18) and a hydraulic pitch system (24) for adjusting a pitch of each of the rotor blades, the controller being configured to:
receive data, from at least one hydraulic pressure sensor of the wind turbine, indicative of a current level of hydraulic pressure available in the hydraulic pitch system;
determine, based on the obtained measurement, an adaptive pitch rate reference indicative of a rate at which the pitch of the rotor blades is to be adjusted by the hydraulic system, and,
transmit a control signal configured to control the hydraulic pitch system to adjust the pitch of the rotor blades in accordance with the determined adaptive pitch rate reference; **characterized in that** the controller is configured to determine the adaptive pitch reference rate by determining a gain factor based on the obtained measurement, and apply the determined gain factor to a predetermined constant pitch reference rate to obtain the adaptive pitch reference rate, wherein the determined gain factor is greater than one.

9. A controller according to Claim 8, wherein the determined gain factor is proportional to the current level of hydraulic pressure.

10. A controller according to Claim 8 or Claim 9, wherein the hydraulic pitch system comprises a plurality of hydraulic pumps, and wherein the predetermined constant pitch reference rate corresponds to a pitch reference rate achievable when using only one of the hydraulic pumps.

11. A controller according to any previous claim, wherein the controller is configured to determine the adaptive pitch rate reference to vary linearly with the measured hydraulic pressure.

12. A controller according to any previous claim, wherein the controller is configured to perform the steps when the wind turbine is operating in a start-up mode in which a generator speed of the wind turbine is to be increased prior to the wind turbine producing electricity for a grid to which the wind turbine is connected.

13. A controller according to any previous claim, wherein the determined gain factor is less than or equal to a maximum gain factor indicative of a maximum gain permitted to be applied to the predetermined constant pitch reference rate.

14. A controller according to any previous claim, wherein the current level of hydraulic pressure available in the hydraulic pitch system corresponds to a combined pressure in one or more accumulators of the hydraulic pitch system.

15. A wind turbine comprising a controller according to any of Claims 8-14.

## Patentansprüche

1. Verfahren (30) zum Steuern einer Blattwinkelverstellung bei einer Windkraftanlage (10), wobei die Windkraftanlage eine Vielzahl von Rotorblättern (18) und eine hydraulische Blattwinkelverstelleinrichtung (24) zum Einstellen eines Blattwinkels jedes der Rotorblätter umfasst, wobei das Verfahren Folgendes umfasst:
Erhalten (32) einer Messung, die einen aktuellen Pegel eines in der hydraulischen Blattwinkelverstelleinrichtung verfügbaren Hydraulikdrucks anzeigt;
Bestimmen (34), auf Grundlage der erhaltenen Messung, einer adaptiven Blattwinkel-Referenzrate, die angibt, mit welcher Rate der Blattwinkel der Rotorblätter durch das Hydrauliksystem angepasst werden soll,
und
Steuern der hydraulischen Blattwinkelverstelleinrichtung zum Anpassen (36) des Blattwinkels der Rotorblätter gemäß der bestimmten adaptiven Blattwinkel-Referenzrate; **dadurch gekennzeichnet, dass** das Bestimmen der adaptiven Blattwinkel-Referenzrate das Bestimmen eines Verstärkungsfaktors auf Grundlage der erhaltenen Messung und das Anwenden des bestimmten Verstärkungsfaktors auf eine vorbestimmte konstante Blattwinkel-Referenzrate umfasst, um die adaptive Blattwinkel-Referenzrate zu erhalten, wobei der bestimmte Verstärkungsfaktor größer als eins ist.

2. Verfahren nach Anspruch 1, wobei der bestimmte Verstärkungsfaktor proportional zum aktuellen Pegel des Hydraulikdrucks ist.

3. Verfahren nach Anspruch 1 oder Anspruch 2, wobei die hydraulische Blattwinkelverstelleinrichtung eine Vielzahl von Hydraulikpumpen umfasst und wobei die vorbestimmte konstante Blattwinkel-Referenzrate einer Blattwinkel-Referenzrate entspricht, die bei Verwendung nur einer der Hydraulikpumpen erreichbar ist.

4. Verfahren nach einem der vorstehenden Ansprüche, wobei die adaptive Blattwinkel-Referenzrate so bestimmt wird, dass sie linear mit dem gemessenen Hydraulikdruck variiert.

5. Verfahren nach einem der vorstehenden Ansprüche, wobei das Verfahren umgesetzt wird, wenn die Windkraftanlage in einem Anfahrmodus arbeitet, in dem die Generatorgeschwindigkeit der Windkraftanlage erhöht werden soll, bevor die Windkraftanlage Strom für ein Netz erzeugt, an das die Windkraftanlage angeschlossen ist.

6. Verfahren nach einem der vorstehenden Ansprüche, wobei der bestimmte Verstärkungsfaktor kleiner als oder so groß wie ein maximaler Verstärkungsfaktor ist, der eine maximale zulässige Verstärkung anzeigt, die auf die vorbestimmte konstante Blattwinkel-Referenzrate angewendet werden soll.

7. Verfahren nach einem der vorstehenden Ansprüche, wobei der aktuelle Pegel eines in der hydraulischen Blattwinkelverstelleinrichtung verfügbaren hydraulischen Drucks einem kombinierten Druck in einem oder mehreren Speichern der hydraulischen Blattwinkelverstelleinrichtung entspricht.

8. Steuereinheit (26) zum Steuern einer Blattwinkelverstellung einer Windkraftanlage (10), wobei die Windkraftanlage eine Vielzahl von Rotorblättern (18) und eine hydraulische Blattwinkelverstelleinrichtung (24) zum Anpassen eines Blattwinkels jedes der Rotorblätter umfasst, wobei die Steuereinheit zu Folgendem konfiguriert ist:
Daten, von mindestens einem Hydraulikdrucksensor der Windkraftanlage, zu empfangen, die einen aktuellen Pegel eines in der hydraulischen Blattwinkelverstelleinrichtung verfügbaren Hydraulikdrucks anzeigen;
auf Grundlage der erhaltenen Messung eine adaptive Blattwinkel-Ratenreferenz zu bestimmen, welche eine Rate angibt, mit welcher der Blattwinkel der Rotorblätter durch das Hydrauliksystem angepasst werden soll,
und
ein Steuersignal zu senden, das dafür konfiguriert ist, die hydraulische Blattwinkelverstelleinrichtung zu steuern, um den Blattwinkel der Rotorblätter gemäß der bestimmten adaptiven Blattwinkel-Referenzrate anzupassen; **dadurch gekennzeichnet, dass** die Steuereinheit dafür konfiguriert ist, die adaptive Blattwinkel-Referenzrate durch Bestimmen eines Verstärkungsfaktors auf Grundlage der erhaltenen Messung zu bestimmen und den bestimmten Verstärkungsfaktor auf eine vorbestimmte konstante Blattwinkel-Referenzrate anzuwenden, um die adaptive Blattwinkel-Referenzrate zu erhalten, wobei der bestimmte Verstärkungsfaktor größer als eins ist.

9. Steuereinheit nach Anspruch 8, wobei der bestimmte Verstärkungsfaktor proportional zum aktuellen Pegel des Hydraulikdrucks ist.

10. Steuereinheit nach Anspruch 8 oder Anspruch 9, wobei die hydraulische Blattwinkelverstelleinrichtung eine Vielzahl von Hydraulikpumpen umfasst und wobei die vorbestimmte konstante Blattwinkel-Referenzrate einer Blattwinkel-Referenzrate entspricht, die bei Verwendung nur einer der Hydraulikpumpen erreichbar ist.

11. Steuereinheit nach einem der vorstehenden Ansprüche, wobei die Steuereinheit dafür konfiguriert ist, die adaptive Blattwinkel-Referenzrate so zu bestimmen, dass sie linear mit dem gemessenen Hydraulikdruck variiert.

12. Steuereinheit nach einem der vorstehenden Ansprüche, wobei die Steuereinheit dafür konfiguriert ist, die Schritte durchzuführen, wenn die Windkraftanlage in einem Anfahrmodus arbeitet, in dem die Generatorgeschwindigkeit der Windkraftanlage erhöht werden soll, bevor die Windkraftanlage Strom für ein Netz erzeugt, an das die Windkraftanlage angeschlossen ist.

13. Steuereinheit nach einem der vorstehenden Ansprüche, wobei der bestimmte Verstärkungsfaktor kleiner als oder so groß wie ein maximaler Verstärkungsfaktor ist, der eine maximale zulässige Verstärkung anzeigt, die auf die vorbestimmte konstante Blattwinkel-Referenzrate angewendet werden soll.

14. Steuereinheit nach einem der vorstehenden Ansprüche, wobei der aktuelle Pegel eines in der hydraulischen Blattwinkelverstelleinrichtung verfügbaren hydraulischen Drucks einem kombinierten Druck in einem oder mehreren Speichern der hydraulischen Blattwinkelverstelleinrichtung entspricht.

15. Windkraftanlage, die eine Steuereinheit nach einem der Ansprüche 8-14 umfasst.

## Revendications

1. Procédé (30) de commande du pas de pale dans une éolienne (10), l'éolienne comprenant une pluralité de pales de rotor (18) et un système de pas hydraulique (24) pour ajuster un pas de chacune des pales de rotor, le procédé comprenant :
l'obtention (32) d'une mesure indicative d'un niveau actuel de pression hydraulique disponible dans le système de pas hydraulique ;
la détermination (34), sur la base de la mesure obtenue, d'un taux de référence de pas adaptatif indicatif d'un taux auquel le pas des pales de rotor doit être ajusté par le système hydraulique,
et,
la commande du système de pas hydraulique pour ajuster (36) le pas des pales de rotor conformément au taux de référence de pas adaptatif déterminé ; **caractérisé en ce que** la détermination du taux de référence de pas adaptatif comprend la détermination d'un facteur de gain sur la base de la mesure obtenue et l'application du facteur de gain déterminé à un taux de référence de pas constant prédéterminé pour obtenir le taux de référence de pas adaptatif, dans lequel le facteur de gain déterminé est supérieur à un.

2. Procédé selon la revendication 1, dans lequel le facteur de gain déterminé est proportionnel au niveau actuel de pression hydraulique.

3. Procédé selon la revendication 1 ou la revendication 2, dans lequel le système de pas hydraulique comprend une pluralité de pompes hydrauliques et dans lequel le taux de référence de pas constant prédéterminé correspond à un taux de référence de pas réalisable lors de l'utilisation d'une seule des pompes hydrauliques.

4. Procédé selon une quelconque revendication précédente, dans lequel la référence de taux de pas adaptatif est déterminée pour varier de manière linéaire avec la pression hydraulique mesurée.

5. Procédé selon une quelconque revendication précédente, dans lequel le procédé est mis en œuvre lorsque l'éolienne fonctionne en mode de démarrage, dans lequel une vitesse de générateur de l'éolienne doit être augmentée avant que l'éolienne ne produise de l'électricité pour un réseau auquel l'éolienne est connectée.

6. Procédé selon une quelconque revendication précédente, dans lequel le facteur de gain déterminé est inférieur ou égal à un facteur de gain maximal indicatif d'un gain maximal autorisé à être appliqué au taux de référence de pas constant prédéterminé.

7. Procédé selon une quelconque revendication précédente, dans lequel le niveau actuel de pression hydraulique disponible dans le système de pas hydraulique correspond à une pression combinée dans un ou plusieurs accumulateurs du système de pas hydraulique.

8. Dispositif de commande (26) pour commander un pas de pale dans une éolienne (10), l'éolienne comprenant une pluralité de pales de rotor (18) et un système de pas hydraulique (24) pour ajuster un pas de chacune des pales de rotor, le dispositif de commande étant configuré pour :
recevoir des données, provenant d'au moins un capteur de pression hydraulique de l'éolienne, indicatif d'un niveau actuel de pression hydraulique disponible dans le système de pas hydraulique ;
déterminer, sur la base de la mesure obtenue, une référence de taux de pas adaptatif indicative d'un taux auquel le pas des pales de rotor doit être ajusté par le système hydraulique,
et,
transmettre un signal de commande configuré pour commander le système de pas hydraulique pour ajuster le pas des pales de rotor conformément à la référence de taux de pas adaptatif déterminée ; **caractérisé en ce que** le dispositif de commande est configuré pour déterminer le taux de référence de pas adaptatif en déterminant un facteur de gain sur la base de la mesure obtenue et appliquer le facteur de gain déterminé à un taux de référence de pas constante prédéterminée pour obtenir le taux de référence de pas adaptatif, dans lequel le facteur de gain déterminé est supérieur à un.

9. Dispositif de commande selon la revendication 8, dans lequel le facteur de gain déterminé est proportionnel au niveau actuel de pression hydraulique.

10. Dispositif de commande selon la revendication 8 ou la revendication 9, dans lequel le système de pas hydraulique comprend une pluralité de pompes hydrauliques et dans lequel le taux de référence de pas constant prédéterminé correspond à un taux de référence de pas réalisable en utilisant une seule des pompes hydrauliques.

11. Dispositif de commande selon une quelconque revendication précédente, dans lequel le dispositif de commande est configuré pour déterminer la référence de taux de pas adaptatif pour qu'elle varie de manière linéaire avec la pression hydraulique mesurée.

12. Dispositif de commande selon une quelconque revendication précédente, dans lequel le dispositif de commande est configuré pour effectuer les étapes lorsque l'éolienne fonctionne en mode de démarrage, dans lequel la vitesse du générateur de l'éolienne doit être augmentée avant que l'éolienne ne produise de l'électricité pour un réseau auquel l'éolienne est connectée.

13. Dispositif de commande selon une quelconque revendication précédente, dans lequel le facteur de gain déterminé est inférieur ou égal à un facteur de gain maximal indicatif d'un gain maximal autorisé à être appliqué au taux de référence de pas constant prédéterminé.

14. Dispositif de commande selon une quelconque revendication précédente, dans lequel le niveau actuel de pression hydraulique disponible dans le système de pas hydraulique correspond à une pression combinée dans un ou plusieurs accumulateurs du système de pas hydraulique.

15. Éolienne comprenant un dispositif de commande selon l'une quelconque des revendications 8-14.
